**Europäisches Patentamt**

**European Patent Office**

**Office européen des brevets**

(19)

(11) Veröffentlichungsnummer: **0 061 118**

**B1**

(12) # EUROPÄISCHE PATENTSCHRIFT

(45) Veröffentlichungstag der Patentschrift:
13.08.86

(21) Anmeldenummer: **82102090.6**

(22) Anmeldetag: **15.03.82**

(51) Int. Cl.⁴: **C 08 G 69/34**

(54) **Thermoplastische Polyamide auf Basis dimerisierter Fettsäuren und deren Herstellung.**

(30) Priorität: **21.03.81 DE 3111226**

(43) Veröffentlichungstag der Anmeldung:
**29.09.82 Patentblatt 82/39**

(45) Bekanntmachung des Hinweises auf die Patenterteilung:
**13.08.86 Patentblatt 86/33**

(84) Benannte Vertragsstaaten:
**AT BE CH DE FR GB IT LI LU NL SE**

(56) Entgegenhaltungen:
**DE-A-2 754 233**
**FR-A-2 253 778**
**FR-A-2 449 699**
**FR-E-89 918**
**FR-E-94 402**
**US-A-3 499 853**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien, Postfach 1100 Henkelstrasse 67, D-4000 Düsseldorf- Holthausen (DE)**

(84) Benannte Vertragsstaaten:
**AT BE CH DE FR GB IT LI LU NL SE**

(73) Patentinhaber: **Chem- Plast SpA, Piazza Vetra 21, I-20123 Milano (IT)**

(84) Benannte Vertragsstaaten: **IT**

(72) Erfinder: **Wiemers, Norbert, Dr., Robert- Koch- Strasse 17, D-4019 Monheim (DE)**
Erfinder: **Albini, Italo, Dr., Via Campari 81- F, I-80143 Pavia (IT)**

## 0 061 118

**Beschreibung**

Die vorliegende Erfindung betrifft die Herstellung von thermoplastischen Polyamiden auf Basis von Fettsäuren, insbesondere von natürlichen Fettsäuren, und wenigstens zwei primäre Aminogruppen sowie Ethergruppen enthaltenden Aminkomponenten durch Polykondensation.

Es ist bekannt, Polyamide aus Polycarbonsäuren, die durch Polymerisation ungesättigter Fettsäuren erhalten werden, und aliphatischen und/oder cycloaliphatischen und/oder aromatischen und/oder heterocyclischen und/oder arylaliphatischen Diaminen herzustellen.

Geeignete sind beispielsweise Ethylendiamin, Hexamethylendiamin oder auch Piperazin oder Diaminodiphenylmethan sowie oligomere endständige Aminogruppen enthaltende Polyether (vgl. US-PS 4 218 351). Dabei soll der Anteil an kurzkettigen Komponenten oberhalb 57,5 Mol-% betragen. Der Anteil, der das Gerüst der dimerisierten Fettsäuren enthält, soll unterhalb von 30 Mol-% liegen. Weiterhin sind thermoplastische hinsichtlich der erwähnten Komponenten Ähnlich aufgebaute Polyamide aus der GB-Patentschrift 1 319 807 bekannt, die sich aber in der Ethergruppen enthaltenden Aminkomponente unterscheiden.

Diese soll nicht mehr als durchschnittlich 5, 6 beziehungsweise vorzugsweise nicht mehr als 2, 6 Ethergruppen im Diamin enthalten.

Nun ist es aber bekannt, daß die Flexibilität von Polyamiden eine entscheidende Voraussetzung für die Schälfestigkeit von Verbindungen bei tiefen Temperaturen ist. Die bisher bekannten Polyamide auf Basis dimerer Fettsäure und Etherdiaminen lassen hinsichtlich ihrer Flexibilität und der damit verbundenen Klebfestigkeit, insbesondere unter Schälbedingungen, noch zu wünschen übrig.

Dies gilt insbesondere für Produkte, die unter Verwendung von 2 bis 3 Ethergruppen im Molekül enthaltende Diamine hergestellt werden können und aus der FR-E-94 402 bekannt sind. Hier ist nicht das hohe Maß an Flexibilität erreicht, wie es erwünscht ist und durch die beiden Vergleichsversuche nachgewiesen wurde. Die Kondensationsprodukte gemäß DE-A-27 54 233 scheiden sich von den erfindungsgemäßen Kondensationsprodukten insbesondere durch einen Gehalt an kurzkettigen gesättigten aliphatischen Dicarbonsäuren. Diese Kondensationsprodukte besitzen eine für viele Anwendungszwecke nicht hinreichende Flexibilität.

Aufgabe der vorliegenden Erfindung war es, die nach dem Stand der Technik bekannten Polyamide bezüglich der Tieftemperatureigenschaften und den damit in Verbindung stehenden Eigenschaften zu verbessern.

Die vorliegende Erfindung besteht nun in einem Verfahren zur Herstellung von thermoplastischen Polyamiden aus dimeren und monomeren Fettsäuren, aliphatischen Diaminen und Polyetherdiaminen, welches dadurch gekennzeichnet ist, daß man

a) 40 - 48 Mol-% dimere Fettsäuren,

b) 2 - 10 Mol-% monomere Fettsäuren einer Kettenlänge von 12 - 22 Kohlenstoffatomen,

c) 25 - 46 Mol-% aliphatische Diamine mit 2 - 40 Kohlenstoffatomen im C-Gerüst und

d) 4 - 25 Mol-% Polyetherdiamine der allgemeinen Formel

$H_2N-R_1-O-(RO)_x-R_2-NH_2$,

in der x eine Zahl zwischen 8 und 80, vornehmlich zwischen 8 und 40, und $R_1$ und $R_2$ gleiche oder verschiedene aliphatische und/oder cycloaliphatische Kohlenwasserstoffreste und R ein gegebenenfalls verzweigter aliphatischer Kohlenwasserstoffrest mit 1 - 6 Kohlenstoffatomen darstellen,

so kondensiert, daß zwischen 0,3 und 15,0 liegende Säure- und Aminzahlen erreicht werden.

Nach einer bevorzugten Verfahrensweise werden

a) dimerisierte Fettsäuren mit einem Dimergehalt oberhalb 70 % sowie

b) monomere Fettsäuren mit 16/18 C-Atomen im Molekül und

c) als aliphatische Diamine Diaminoethan, 1,3-Diamin-propan, 1,4-Diaminobutan und/oder Dimerdiamin sowie

d) als Polyetherdiamine Bis-(3-aminopropyl)-polytetra-hydrofuran eines Molekulargewichts zwischen 700 und 1 500 und/oder Bis-(2-aminopropyl)-polyoxypropylen eines Molekulargewichts zwischen 1 200 und 2 500 kondensiert.

Die erfindungsgemäß einzusetzenden dimerisierten Fettsäuren werden häufig als polymere Fettsäuren bezeichnet und stellen handelsübliche Typen dar, die durch Polymerisation ungesättigter Fettsäuren erhalten werden. Sie enthalten als technische Produkte häufig etwa 50 % an dimerer Fettsäure.

Eingeschlossen sind auch Mischungen verschiedener polymerer Fettsäuren mit einem überwiegenden Anteil, das heißt mehr als 70 % an dimerer Fettsäure, die zusätzlich einen kleinen Anteil an Monocarbonsäuren aufweisen. Diese Monocarbonsäuren mit 12 bis 22 Kohlenstoffatomen können auch Doppelbindungen sowie Verzweigungen erhalten.

Bei den einzusetzenden Polyetherdiaminen handelt es sich ebenfalls um bekannte und zum erheblichen Teil handelsübliche Verbindungen. Als typische Vertreter der Polyetherdiamine sind Bis-(2-aminopropyl)-polyoxypropylene und Bis-(3-aminopropyl)-polytetrahydrofurane zu nennen, die ein zwischen etwa 500 und 5 000 liegendes Molekulargewicht haben. Die hier besonders erwähnten Vertreter sind wegen ihrer leichten Verfügbarkeit bevorzugt. Selbstverständlich sind auch zwei endständige Aminogruppen enthaltende aus polymeren, gegebenenfalls verzweigtkettigen Butandiolen, Pentandiolen und Hexandiolen aufgebaute Polyether verwendbar. Auch könnten Mischether mit zwei primären Aminogruppen eingesetzt werden.

Schließlich werden erfindungsgemäß neben den Etherdiaminen noch niedermolekulare Diamine zur Modifikation mitverwendet. Es handelt sich hierbei um für die Polyamidbildung an sich bekannte Diamine mit einer linearen oder verzweigten Kette mit mehr als zwei Kohlenstoffatomen, wie zum Beispiel Ethylendiamin, 1, 3-Diamino-propan und/oder 1, 4-Diaminobutan, Neopentyldiamin, Hexamethylendiamin, Trimethylhexamethylendiamin. Weiterhin kommen Diamine in Betracht, die aus dimerisierten Fettsäuren erhalten wurden, wobei die Carboxylgruppen durch Amingruppen substituiert wurden. Produkte dieser Art werden häufig als Dimerdiamine bezeichnet. Als Beispiele für cycloaliphatische Diamine können Diaminodicyclohexylmethan, 3-Aminomethyl-3, 5, 5-trimethylcyclohexylamin, für aromatische Diamine Diaminodiphenylmethan, für arylaliphatische Amine Xylylendiamin und für heterocyclische Amine, Piperazin, Dimethylaminopiperazin und Dipiperidylpropan genannt werden.

Die erfindungsgemäß herstellbaren Polyamide werden nach bekannten Verfahren durch Schmelzkondensation hergestellt. Dabei reagieren die Säurekomponenten mit den Aminkomponenten bei Temperaturen von 150 bis 250°C wobei das Reaktionswasser durch Destillation oder falls notwendig unter Verwendung eines azeotropen Lösungsmittels und/oder eines Vakuums entfernt werden kann. Durch geeignete Reaktionsführung und die Wahl eines geringfügigen Überschusses von Säure- beziehungsweise Aminfunktion kann in bekannter Weise auf Amin- beziehungsweise Säurezahl Einfluß genommen werden.

Die neuartigen Polyamide zeichnen sich durch eine überlegene Flexibilität bei tiefen Temperaturen aus. Da durch die Verbesserung der Flexibilität keineswegs die adhesiven Eigenschaften verschlechtert worden sind, eignen sich solche Polyamide bevorzugt als Schmelzklebstoffe in Anwendungen wie Montage, Laminierung, Holzverarbeitung und Schuhindustrie. Sie zeichnen sich durch hervorragende Adhäsion bei der Verbindung von Kunststoffen zu sich selbst oder anderen Substraten wie Holz, Textil, Leder und Metall unter harten Umweltbedingungen aus, wobei ein Temperaturbereich von -20°C bis +80°C in Betracht gezogen wird.

### Beispiele

Die Kondensation wurde in einem entsprechend tubulierten Glaskolben zunächst unter Stickstoffatmosphäre und Rühren vorgenommen. Die vorgelegten Carbonsäuren wurden zunächst auf etwa 60°C erhitzt und dann die weiteren Reaktionskomponenten zugegeben. Innerhalb 1 Stunde wurde dann auf 230°C aufgeheizt und 1 Stunde bei dieser Temperatur gehalten. Dann wurde während der nächsten Stunde bei konstanter Temperatur auf 15 mbar evakuiert. Nach Abkühlen auf 120°C wurde das Reaktionsprodukt abgelassen und zur Bestimmung der Eigenschaften isoliert.

Es wurden folgende Reaktionskomponenten eingesetzt: Dimerisierte Fettsäure (I) mit 72 % dimeren Anteilen Dimerisierte Fettsäure (II) mit 96 % dimeren Anteilen

Tallölfettsäure

Ethylendiamin

Diamin hergestellt über das Nitril einer 96 %igen dimerisierten Fettsäure und anschließende Hydrierung
( = Dimerdiamin)

Bis-(3-aminoproypl)-polytetrahydrofuran Mol.-Gew. 750
( = Polyetherdiamin A)

Bis-(2-aminopropyl)-polyoxypropylen Mol-Gew. 2 000
( = Polyetherdiamin C)

In der folgenden Tabelle 1 sind in Abhängigkeit von der laufenden Nummer des Beispiels die eingesetzten Mengen in g angegeben sowie Amin- und Säurezahl des Reaktionsprodukts. Auch sind der Erweichungspunkt (R + B, ASTM E-28) sowie die für die bei tiefen Temperaturen gefundenen Werte für die Flexibilität in °C aufgeführt. Diese wurde bestimmt, indem ein Prüfkörper der Dimension 20 mm x 170 mm und einer Dicke von 1 mm um einen Messingzylinder mit einem Durchmesser von 25,6 mm um 360° gewickelt wurde. Die Prüfungen erfolgten bei abnehmenden Temperaturen (Prüfkörper und Zylinder im Temperaturgleichgewicht), um die niedrigste Temperatur festzustellen, bei der drei von fünf Prüfkörpern den Wickeltest ohne Bruch überstanden.

3

**Tabelle 1**

| laufende Nr.<br>des Beispiels | 1 | 2 | 3 |
|---|---|---|---|
| Dimere Fettsäure I | 759,2 | – | 795,2 |
| Dimere Fettsäure II | – | 820,8 | – |
| Tallölfettsäure | 59,8 | 34,2 | 59,8 |
| Ethylendiamin | 81,0 | 63,5 | 82,8 |
| Dimerdiamin | – | 173,4 | – |
| Polyetherdiamin A | 112,4 | 168,7 | – |
| Polyetherdiamine | – | – | 380,0 |
| Aminzahl | 0,7 | 5,5 | 2,9 |
| Säurezahl | 9,8 | 1,2 | 1,4 |
| Erweichungspunkt °C | +105 °C | +96 °C | +105 °C |
| Flexibilität bis °C | – 50 °C | –60 °C | – 60 °C |

In der nachfolgenden Tabelle 2 finden sich die Gewichtsangaben der Tabelle 1 umgerechnet in Mol-%/Äquivalente.

**Tabelle 2**

Mol-% / Äquivalente

| laufende Nr.<br>des Beispiels | 1 | 2 | 3 |
|---|---|---|---|
| Dimere Fettsäure I | 42,8 %/0,88 | – / – | 43,0 %/0,81 |
| Dimere Fettsäure II | – – | 45,9 %/0,92 | – / – |
| Tallölfettsäure | 7,1 %/0,07 | 3,8 %/0,04 | 6,8 %/0,07 |
| Ethylendiamin | 45,2 %/0,90 | 33,1 %/0,66 | 44,2 %/0,88 |
| Dimerdiamin | – / – | 10,1 %/0,20 | – / – |
| Polyetherdiamin A | 5,0 %/0,10 | 7,0 %/0,14 | – / – |
| Polyetherdiamin C | – / – | – / – | 6,1 %/0,1 |

**Vergleichsversuche**

Wie in den vorstehenden Beispielen beschrieben, wurden Polyamidkondensate hergestellt, wobei folgende Ansätze gemacht wurden:
a) 802,5 g polymere Fettsäure
55 5 g Tallölfettsäure

65,1 g Ethylendiamin
91,5 g 4, 7, 10-Trioxatridecan-1, 13-diamin
b) 810,0 g polymere Fettsäure I
45,0 g Tallölfettsäure
63,0 g Ethylendiamin
91,8 g 4, 9-Dioxadodecan-1, 12-diamin
Es resultierten Produkte, an denen folgende Kennzahlen festgestellt wurden:

|    | Aminzahl | Säurezahl | Erweichungspunkt | Flexibilität |
|----|----------|-----------|------------------|--------------|
| a) | 3,2      | 5,2       | + 93° C          | - 30° C      |
| b) | 5,2      | 1,6       | + 92° C          | - 25° C      |

**Patentansprüche**

1) Verfahren zur Herstellung von thermoplastischen Polyamiden aus dimeren und monomeren Fettsäuren, aliphatischen Diaminen und Polyetherdiaminen, dadurch gekennzeichnet, daß man
a) 40 - 48 Mol-% dimere Fettsäuren,
b) 2 - 10 Mol-% monomere Fettsäuren einer Kettenlänge von 12 - 22 Kohlenstoffatomen,
c) 25 - 46 Mol-% aliphatische Diamine mit
2 - 40 Kohlenstoffatomen im C-Gerüst und
d) 4 - 25 Mol-% Polyetherdiamine der allgemeinen Formel
$H_2N-R_1-O-(RO)_x-R_2-NH_2$,
in der x eine Zahl zwischen 8 und 80, vornehmlich zwischen 8 und 40, und $R_1$ und $R_2$ gleiche oder verschiedene aliphatische und/oder cycloaliphatische Kohlenwasserstoffreste und R ein gegebenenfalls verzweigter aliphatischer Kohlenwasserstoffrest mit 1 - 6 Kohlenstoffatomen darstellen,
so kondensiert, daß zwischen 0,3 und 15,0 liegende Säure- und Aminzahlen erreicht werden.
2) Verfahren zur Herstellung von thermoplastischen Polyamiden nach Anspruch 1, dadurch gekennzeichnet, daß man
a) als dimere Fettsäuren dimerisierte Fettsäuren mit einem Dimergehalt oberhalb 70 %,
b) als monomere Fettsäuren solche mit 16/18 C-Atomen im Molekül,
c) als aliphatische Diamine Diaminoethan, 1, 3-Diamin-propan, 1, 4-Diaminobutan und/oder Dimerdiamin sowie
d) als Polyetherdiamine Bis-(3-aminopropyl)-polytetra-hydrofuran eines Molekulargewichts zwischen 700 und 1 500 und/oder Bis-(2-aminopropyl)-polyoxypropylen eines Molekulargewichts zwischen 1 200 und 2 500 einsetzt.

**Claims**

1. A process for the production of thermoplastic polyamides from dimeric and monomeric fatty acids, aliphatic diamines and polyether diamines, characterized in that
a) from 40 to 48 mole % dimeric fatty acids,
b) from 2 to 10 mole % monomeric fatty acids containing from 12 to 22 C-atoms,
c) from 25 to 46 mole % aliphatic diamines containing from 2 to 40 C-atoms in the C-chain and
d) from 4 to 25 mole % polyether diamines corresponding to the following general formula
$H_2N-R_1-O-(RO)_x-R_2-NH_2$,
in which x is a number of from 8 to 80, mainly from 8 to 40, and $R_1$ and $R_2$ may be the same or different and represent aliphatic and/or cycloaliphatic hydrocarbons radicals and R represents an optionally branched aliphatic $C_1-C_6$ hydrocarbon radical,
are so condensed that acid and amine numbers of from 0.3 to 15.0 are reached.
2. A process for the production of thermoplastic polyamides as claimed in Claim 1, characterized in that
a) the dimeric fatty acids used are dimerized fatty acids having a dimer content above 70%,
b) the monomeric fatty acids used are those containing from 16 to 18 C-atoms in the molecule,

c) the aliphatic diamines used are diaminoethane, 1, 3-diaminopropane, 1, 4-diaminobutane and/or dimerdiamine and

d) the polyetherdiamines used are bis-(3-aminopropyl)-polytetrahydrofuran having a molecular weight of from 700 to 1500 and/or bis-(2-aminopropyl)-polyoxypropylene having a molecular weight of from 1200 to 2500.


## Revendications

1°) Procédé pour la préparation de polyamides thermoplastiques à partir d'acides gras dimères et monomères, de diamines aliphatiques et de polyétherdiamines, caractérisé par le fait que l'on condense

a) 40-48 % en mole d'acides gras dimères,

b) 2-10 % en mole d'acides gras monomères ayant une longueur de chaîne de 12-22 atomes de carbone,

c) 25-46 % en mole de diamines aliphatiques ayant 2-40 atomes de carbone dans le squelette carboné et,

d) 4-25 % en mole de polyétherdiamines de formule générale

$H_2N-R_1-O-(RO)_x-R_2-NH_2$,

dans laquelle x représente un nombre entre 8 et 80, de préférence entre 8 et 40, et $R_1$ et $R_2$ représentent des restes hydrocarbonés aliphatiques et/ou cycloaliphatiques identiques ou différents et R représente un reste hydrocarboné aliphatique éventuellement ramifié ayant de 1 à 6 atomes de carbone,

de façon a obtenir des indices d'acide et d'amine compris entre 0,3 et 15,0.

2°) Procédé pour la préparation de polyamides thermoplastiques selon la revendication 1, caractérisé par le fait que l'on utilise

a) en tant qu'acides gras dimères, des acides gras rendus dimères, ayant une teneur en dimère supérieure à 70 %,

b) en tant qu'acides gras monomères, ceux contenant 16-18 atomes de carbone dans leur molécule,

c) en tant que diamines aliphatiques le diaminoéthane, le 1, 3-diaminopropane, le 1, 4-diaminobutane et/ou une diamine dimère ainsi que,

d) en tant que polyétherdiamine le bis-(3-aminopropyl)-polytétrahydrofurance ayant un poids moléculaire compris entre 700 et 1500 et/ou de bis-(2-aminopropyl)-polyoxypro-pylène ayant un poids moléculaire compris entre 1200 et 2500.